# EUROPEAN PATENT SPECIFICATION

(11) **EP 4 628 954 B1**
(45) Date of publication and mention of the grant of the patent: **21.10.2026**
(21) Application number: 24188561.5
(22) Date of filing: 15.07.2024
(51) Int. Cl.: G02B 6/30, G02B 6/36, G02B 6/42

(54) **OPTICAL FIBER ASSEMBLY, OPTICAL FIBER HOLDER STRUCTURE, OPTICAL COMMUNICATION DEVICE, AND MANUFACTURING METHOD OF OPTICAL COMMUNICATION DEVICE**
GLASFASERANORDNUNG, GLASFASERHALTERSTRUKTUR, OPTISCHE KOMMUNIKATIONSVORRICHTUNG UND HERSTELLUNGSVERFAHREN FÜR EINE OPTISCHE KOMMUNIKATIONSVORRICHTUNG
ENSEMBLE DE FIBRES OPTIQUES, STRUCTURE DE SUPPORT DE FIBRES OPTIQUES, DISPOSITIF DE COMMUNICATION OPTIQUE ET PROCÉDÉ DE FABRICATION DE DISPOSITIF DE COMMUNICATION OPTIQUE

(30) Priority: 02.04.2024 TW 113112513
(43) Date of publication of application: 08.10.2025
(73) Proprietor: Wistron Corporation, New Taipei City 22181 (TW)
(72) Inventor: CHANG, Chun Yang, 22181 New Taipei City (TW); LU, Guan Fu, 22181 New Taipei City (TW)
(74) Representative: Becker, Eberhard

(56) References cited:
- WO-A1-2022/216306
- CN-A- 107 219 591
- US-A1- 2016 341 919
- US-A1- 2021 157 056
- US-A1- 20240 085 634

## Description

### BACKGROUND

### Technical Field

The disclosure relates to an optical fiber assembly, an optical fiber holder structure, an optical communication device, and a manufacturing method of the optical communication device.

### Description of Related Art

With the transmission requirements of high-performance computing and artificial intelligence (AI) applications, as well as the need to accelerate the performance of data centers and cloud computing, traditional telecommunications transmission has faced bottlenecks, and optical signal transmission has become a new generation solution, and thus silicon photonics technology and related packaging optical components have become the focus of attention. For example, AI servers will use a large number of 800G optical fiber modules and higher transmission speed optical fiber module products. It is expected that 51.2T high-speed transmission silicon photonic chips and related technologies for co-packaged optical component will be widely adopted starting in the coming year.

However, in the current product process, the existing technology cannot meet the specification requirements of miniaturized high-speed modules in terms of manufacturing process. Instead, current optical modules are used, but it cannot successfully solve the risk of mechanical interference and meet the size required by the specification.

US 2016/341919 discloses an example of an optical fiber assembly.

### SUMMARY

The disclosure provides an optical fiber assembly, an optical fiber holder structure, an optical communication device, and a manufacturing method of the optical communication device to effectively achieve the required spatial configuration and take into account both structural strength and optical characteristics.

An optical fiber assembly of the disclosure includes a base having a groove, a lid assembled to the base and having an adhesive surface, an optical fiber, and a first adhesive. Part of the optical fiber is accommodated along the groove, and positioned in the groove by abutting against the lid. The adhesive surface is fixed to a photonic integrated circuit (PIC) of an optical engine via the first adhesive such that the optical fiber is optically coupled to an optical waveguide of the photonic integrated circuit.

An optical fiber holder structure of the disclosure is configured to connect an optical fiber to a photonic integrated circuit of an optical engine. The optical fiber holder structure includes a base and a lid. The base is in a stepped shape and has high and low steps. The base also has a groove at the high step, a first front edge, and a first rear edge. The groove is connected between the first front edge and the first rear edge. The first front edge faces the photonic integrated circuit, the first rear edge faces away from the photonic integrated circuit, and the first rear edge is inclined to connect the high step and the low step. The lid is assembled to the high step of the base, so that part of the optical fiber is accommodated along the groove, and positioned in the groove by abutting against the lid. The lid has a second front edge and a second rear edge. The second front edge faces the photonic integrated circuit and protrudes from the first front edge. The second rear edge is aligned with the first rear edge at the high step, and a length of the base along an extending direction of the optical fiber is greater than a length of the lid along an extending direction of the optical fiber.

An optical communication device of the disclosure includes a housing and an optical engine and at least one optical fiber assembly configured in the housing. The optical engine has a photonic integrated circuit. The optical fiber assembly includes a base having a groove, a lid assembled to the base and having an adhesive surface, an optical fiber, and a first adhesive. Part of the optical fiber is accommodated along the groove and positioned in the groove by abutting against the lid. The adhesive surface is fixed to the photonic integrated circuit via the first adhesive such that the optical fiber is optically coupled to an optical waveguide of the photonic integrated circuit.

A manufacturing method of an optical communication device of the disclosure includes the following steps. An optical module, an optical fiber assembly, and a housing are provided. The optical module includes an optical engine and a circuit board. The optical engine is configured on the circuit board. The optical fiber assembly includes a base, a lid, an optical fiber, and a stopper. The optical fiber passes through the stopper. The optical fiber is clamped between the base and the lid, so that an end of the optical fiber protrudes out of the base and the lid. The housing includes a bottom housing and a top housing. The circuit board and the optical fiber assembly are assembled to the bottom housing respectively. The optical fiber assembly is limited by the stopper inserted into a recess of the bottom housing. The optical fiber assembly is optically coupled to a photonic integrated circuit. The top housing is assembled to the bottom housing to cover the optical engine and optical fiber assembly, so that the optical fiber and the stopper are fixed between the top housing and the bottom housing. The step of optically coupling the optical fiber assembly to the photonic integrated circuit also includes the following. The optical module and the bottom housing are placed on an optical coupling machine. A first adhesive is provided on an adhesive surface of the lid, so that the adhesive surface abuts against the photonic integrated circuit via the first adhesive. The optical engine is started. An end of the optical fiber is optically coupled to an optical waveguide of the photonic integrated circuit via the optical coupling machine. The first adhesive is cured.

Based on the above, for the optical fiber assembly, the optical fiber holder structure, and the optical communication device in this case, the relevant structures thereof are distributed on different components. The base has the groove for accommodating the optical fiber, and the lid has an adhesive surface for adhering and fixing to the photonic integrated circuit. Therefore, the required functions of fixing the optical fiber and optically coupling to the photonic integrated circuit are added to the base and the lid respectively. In this way, a single component only needs to correspond to a single additional function, so that the components (base and lid) can have adjustable space according to size requirements and optical coupling process requirements, and the completed optical fiber holder structure can increase the gap between the optical fiber holder structure and the housing.

According to the component made above, the area clamped during the optical coupling process can be increased. At the same time, the bonding strength between components after using adhesive can also be changed accordingly particularly for the assembled optical communication device, i.e., the adhesive configuration between the optical fiber assembly and the optical engine as well as the structural relationship between the optical fiber assembly and the housing.

### BRIEF DESCRIPTION OF THE DRAWINGS

FIG. 1 is a schematic view of an optical communication device according to an embodiment of the disclosure.
FIG. 2 is an exploded view of some components of the optical communication device of FIG. 1.
FIG. 3 is an exploded view of some components of the optical communication device of FIG. 1.
FIG. 4A is an exploded view of some components of an optical fiber assembly.
FIG. 4B is a partial cross-sectional view of an optical communication device.
FIG. 5 is a flowchart of a manufacturing method of an optical communication device.
FIG. 6A to FIG. 6C are partial component schematic views of an optical communication device according to different embodiments of the disclosure.

### DESCRIPTION OF THE EMBODIMENTS

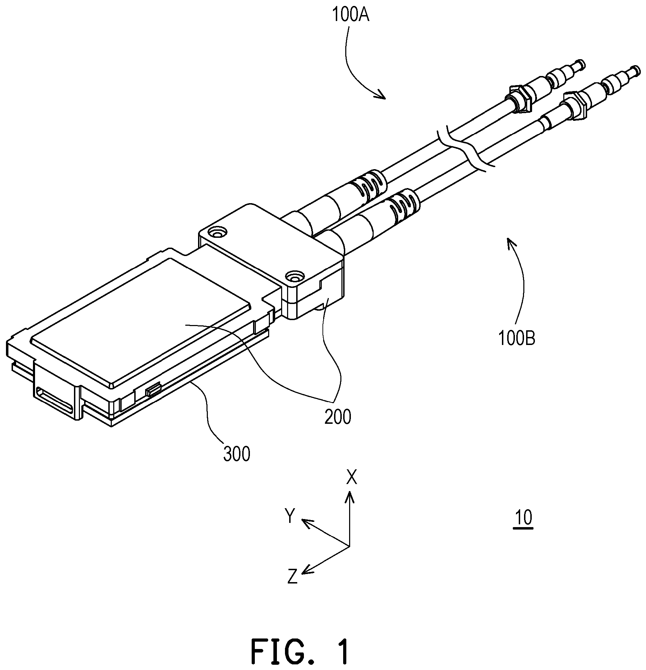

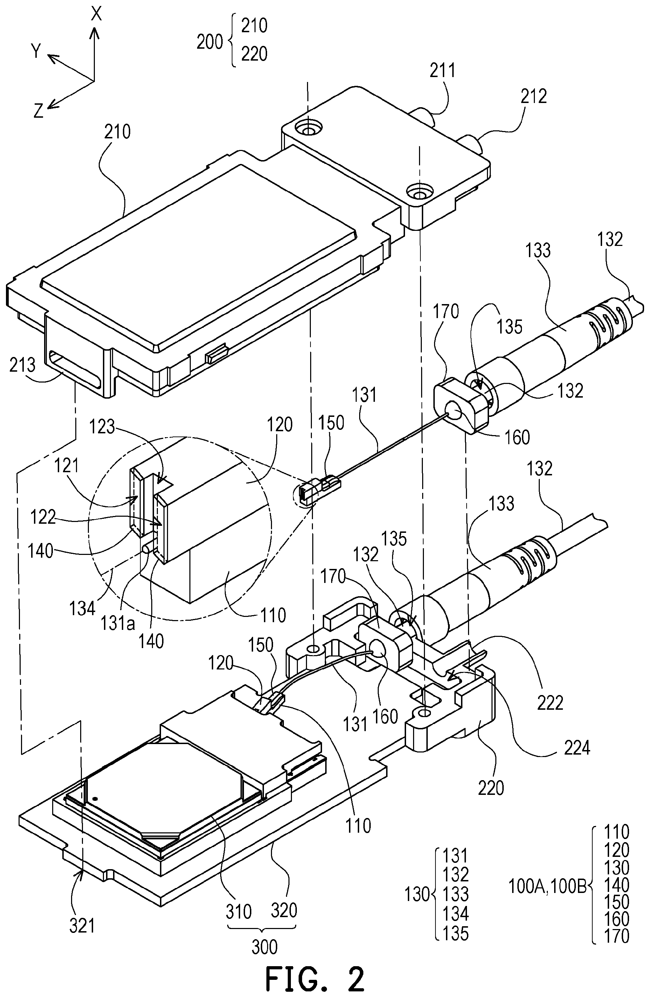

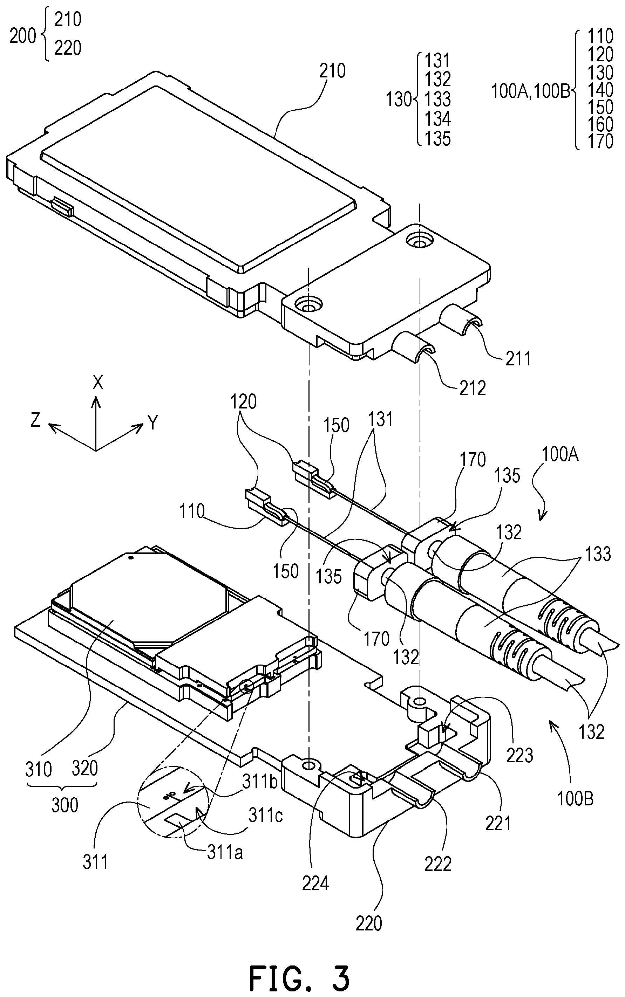

FIG. 1 is a schematic diagram of an optical communication device according to an embodiment of the disclosure. FIG. 2 is an exploded view of some components of the optical communication device of FIG. 1. FIG. 3 is an exploded view of some components of the optical communication device of FIG. 1. FIG. 3 adopts a different perspective and a different degree of decomposition (explosion) than those of FIG. 2 to facilitate simultaneous comparison of FIG. 2 and FIG. 3. At the same time, rectangular coordinates XYZ are provided to facilitate component description. Referring to FIG. 1 to FIG. 3 at the same time, in the embodiment, an optical communication device 10 includes a housing 200 and an optical module 300 and at least one optical fiber assembly (here, two optical fiber assemblies 100A and 100B are taken as examples, but are not limited to thereto) configured in the housing 200.

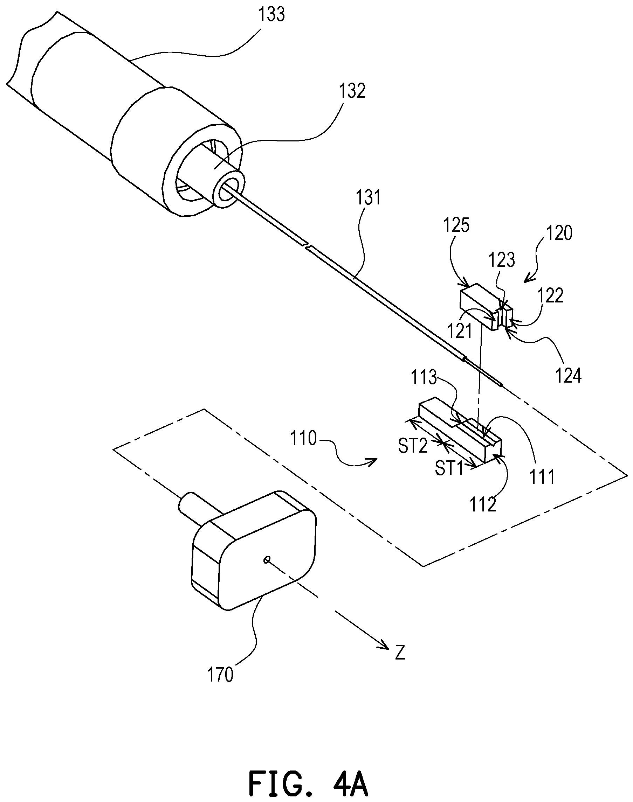

As shown in FIG. 2 and FIG. 3, the optical module 300 includes an optical engine 310 and a circuit board 320. The optical engine 310 is configured on the circuit board 320, and the optical engine 310 has a photonic integrated circuit 311 for optical communication with the optical fiber assemblies 100A and 100B. FIG. 4A is an exploded view of some components of an optical fiber assembly. Referring to FIG. 2 to FIG. 4A at the same time, the optical fiber assemblies 100A and 100B of the embodiment have the same components, each including a base 110, a lid 120, an optical fiber 130, and a first adhesive 140. The base 110 has a groove 111. The lid 120 is assembled to the base 110. The lid 120 has an adhesive surface 121. Part of the optical fiber 130 is accommodated along the groove 111 and positioned in the groove 111 by abutting against the lid 120. The adhesive surface 121 is then fixed to the photonic integrated circuit 311 via the first adhesive 140 such that the optical fiber 130 is optically coupled to an optical waveguide 311a of the photonic integrated circuit 311.

Roughly speaking, as shown in FIG. 2 and FIG. 3, the housing 200 includes a top housing 210 and a bottom housing 220 that can be assembled with each other, and the optical engine 310 is assembled to the bottom housing 220 along with the circuit board 320, and then after the optical fiber assemblies 100A and 100B are assembled to the bottom housing 220 and optically coupled to the optical engine 310, the top housing 210 can be assembled to the bottom housing 220 to cover the optical module 300 and the optical fiber assemblies 100A and 100B, thereby completing the assembly process of the optical communication device 10.

In detail, the adhesive surfaces 121 and 122 are inclined relative to an optical axis 134 of the optical fiber 130 (the optical axis 134 is parallel to the Z-axis or consistent with the Z-axis), and the inclination angle is adapted for an optical coupling angle of the optical fiber 130 and the optical waveguide 311a. For example, in order to ensure that light is transmitted without leakage between the optical fiber 130 and the optical waveguide 311a of different media, it is necessary to provide specific incident angle characteristics for the refraction of light. Therefore, the lid 120 of the embodiment has the inclination feature of the adhesive surfaces 121 and 122 at a specific angle to meet the transmission requirements of light. Simply put, the optical fiber assemblies 100A and 100B of the embodiment use the adhesive surfaces 121 and 122 of the lid 120 to connect with a side surface 311c of the photonic integrated circuit 311 of the optical engine 310 via the first adhesive 140, so that a wire core 131 of the optical fiber 130, especially an end 131a protruding from the adhesive surfaces 121 and 122 (as shown in FIG. 2) can correspond to the optical waveguide 311a of the photonic integrated circuit 311 to achieve an optical coupling effect that enables light to be transmitted smoothly between the two. At the same time, during the optical coupling process, after completing the adhering and fixing via the adhesive surfaces 121 and 122, the inclination feature allows the optical fiber 130 to meet the refraction requirements of light.

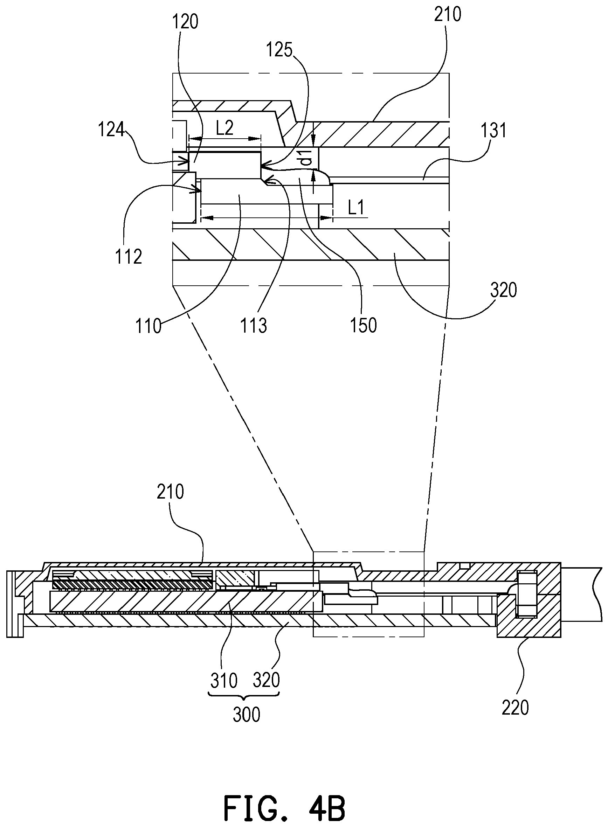

FIG. 4B is a partial cross-sectional view of an optical communication device. Referring to FIG. 4A and FIG. 4B at the same time and comparing with FIG. 2 or FIG. 3, in the embodiment, the optical fiber 130, the base 110, and the lid 120 form an optical fiber holder structure to facilitate the docking of the optical fiber 130 to the photonic integrated circuit 311 of the optical engine 310. Here, the base 110 is in a stepped shape and has a high step ST1 and a low step ST2. The base 110 also has a first front edge 112 and a first rear edge 113 located at the high step ST1 and opposite to each other. The first front edge 112 faces the photonic integrated circuit 311. The first rear edge 113 faces away from the photonic integrated circuit 311. The groove 111 is located at the high step ST11 and connected between the first front edge 112 and the first rear edge 113. The first rear edge 113 is inclined to connect the high step ST1 and the low step ST2.

The lid 120 is assembled to the high step ST1 of the base 110, so that part of the optical fiber 130 is accommodated along the groove 111 and positioned in the groove 111 by abutting against the lid 120. The lid 120 has a second front edge 124 and a second rear edge 125 opposite to each other. The second front edge 124 faces the photonic integrated circuit 311 and protrudes from the first front edge 112. The second rear edge 125 is aligned with the first rear edge 113 at the high step ST1, and a length L1 of the base 110 along an extending direction of the optical fiber 130 is greater than a length L2 of the lid 120 along an extending direction of the optical fiber 130. The adhesive surfaces 121 and 122 are located at the second front edge 124.

A second adhesive 150 is configured on an upper surface of the low step ST2 of the base 110 to adhere and fix the optical fiber 130, the first rear edge 113 at the low step ST2 and the high step ST1 of the base 110, and the second rear edge 125 of the lid 120 together so as to complete the optical fiber holder structure. The completed optical fiber holder structure has a relative distance d1 compared to the housing 200. Here, the second adhesive 150 is relative to the top housing 210 of the housing 200 to ensure that there is no structural interference between the optical fiber holder structure and the housing 200.

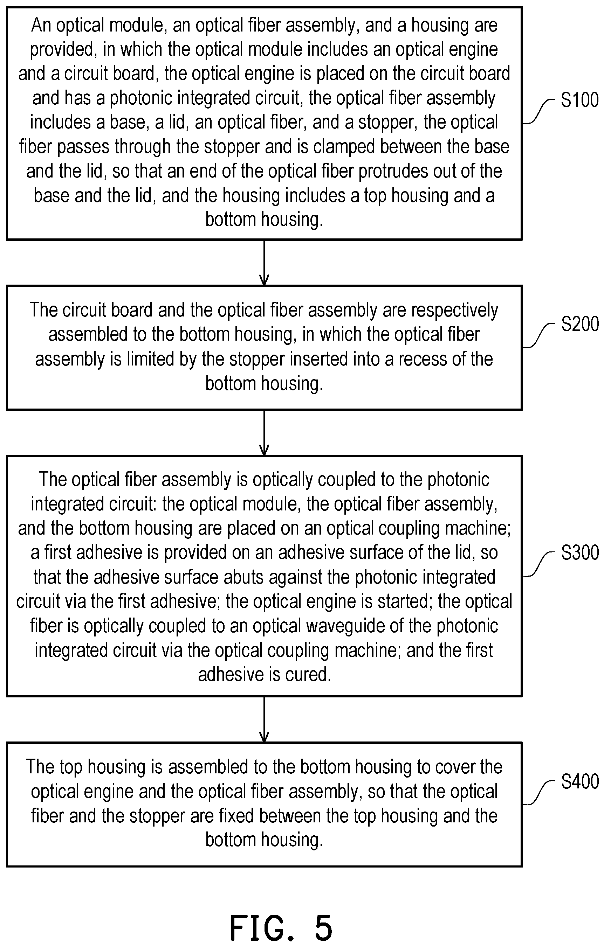

FIG. 5 is a flowchart of a manufacturing method of an optical communication device. Referring to FIG. 5 and correspondingly referring to at least any one of FIG. 2 to FIG. 4A according to the steps. First, as shown in step S100, the optical module 300, the optical fiber assemblies 100A and 100B, and the housing 200 are provided, in which the structural features of each component are as mentioned above. Next, as shown in step S200, the circuit board 320 and the optical fiber assemblies 100A and 100B are respectively assembled to the bottom housing 220. Next, as shown in step S300, the optical fiber assemblies 100A and 100B are optically coupled to the photonic integrated circuit 311, and finally, as shown in step S400, the top housing 210 is assembled to the bottom housing 220 to cover the optical engine 310 and the optical fiber assemblies 100A and 100B, so that the optical fiber assemblies 100A and 100B are fixed between the top housing 210 and the bottom housing 220.

The following will be described in detail based on the manufacturing sequence of semifinished products/finished products and the above steps.

The first is the manufacturing process of the optical fiber assemblies 100A and 100B. Referring to FIG. 4A and comparing with FIG. 2, the lid 120 of the embodiment also has a recess 123, which separates the adhesive surfaces 121 and 122 into two parts. After extending out of the groove 111 with a V-shaped cross section, an end of the optical fiber 130 (the end 131a shown in FIG. 2) will be located at a position corresponding to the recess 123 and between the two parts (adhesive surfaces 121 and 122). Therefore, when assembling the lid 120 and the base 110 together, it is also necessary to ensure that the adhesive surfaces 121 and 122 protrude outside the base 110 to avoid interference between the wire core 131 and the photonic integrated circuit 311, and since the recess 123 can expose the end 131a of the optical fiber 130, it is beneficial to aligning with the position of the optical waveguide 311a.

In addition to the aforementioned components, the optical fiber assemblies 100A and 100B of the embodiment also include a stopper 170, a second adhesive 150, and a third adhesive 160. The optical fiber 130 is further divided into an outer covering layer 132, a protective sleeve 133, and the aforementioned wire core 131. The outer covering layer 132 covers the wire core 131. The protective sleeve 133 covers the outer covering layer 132. Accordingly, the manufacturing method of the optical fiber assemblies 100A and 100B actually needs to include: passing the optical fiber 130 through the stopper 170, and adhering and fixing the wire core 131 of the optical fiber 130 and the stopper 170 together via the third adhesive 160 (as shown in FIG. 2). Next, part of the optical fiber 130 is placed along the groove 111 of the base 110 so that the end 131a of the optical fiber 130 protrudes out of the groove 111. Next, the lid 120 and the base 110 are assembled together, so that part of the optical fiber 130 in the groove 111 is clamped between the lid 120 and the base 110. Finally, the lid 120, the optical fiber 130, and the base 110 are adhered and fixed together via the second adhesive 150. The completed optical fiber assemblies 100A and 100B are as shown in FIG. 2 and FIG. 3.

After the assembly of the optical fiber assemblies 100A and 100B is completed, step S200 is performed. The stoppers 170 are respectively inserted into the recesses 223 and 224 of the bottom housing 220 along the X-axis to be pre-positioned and supported, as shown in FIG. 2 or FIG. 3, so that the stopper 170 can produce a limiting effect on both the Z-axis and the Y-axis relative to the bottom housing 220. It should also be mentioned that a mark 311b is disposed on a top surface of the photonic integrated circuit 311, so that when performing the optical coupling process, the operator can determine the position of the optical waveguide 311a below based on the location of the mark 311b. Therefore, when performing step S200, with the end 131a of the optical fiber 130 exposed by the recess 123 of the lid 120, the operator can align the lid 120 and the base 110 to the mark 311b as a preliminary alignment position.

Furthermore, due to the presence of the stopper 170, the optical fiber 130 will form a neck portion 135 between the stopper 170 and the protective sleeve 133, and part of the outer covering layer 132 of the optical fiber 130 will be exposed from the neck portion 135. Therefore, when the stopper 170 is inserted into the recesses 223 and 234, it also means that the neck portion 135 will be partially limited by the bottom housing 220 by being supported on and locked onto the bottom housing 220. Here, the bottom housing 220 can be regarded as the support and carrying structure of the optical fiber assemblies 100A and 100B, and is also convenient for subsequent optical coupling processes.

Next, the optical coupling process shown in step S300 is performed, which includes: placing the optical module 300 and the bottom housing 220 on an optical coupling machine (not shown), and applying the first adhesive 140 to the adhesive surfaces 121 and 122 of the lid 120, so that the adhesive surfaces 121 and 122 abut against the photonic integrated circuit 311 via the first adhesive 140. Then, the optical engine 310 is started, and the end 131a of the optical fiber 130 is optically coupled to the optical waveguide 311a of the photonic integrated circuit 311 via the optical coupling machine. Here, the optical coupling machine can clamp two opposite sides of the lid 120 and the base 110 via a movable clamp (not shown), thereby adjusting a coupling position of the optical fiber 130 corresponding to the optical waveguide 311a, and determining whether the relative position of the optical fiber 130 and the optical waveguide 311a meets the optical coupling conditions by light characteristics sensed by a sensor (not shown). After the alignment (optical coupling) is completed, the first adhesive 140 can be cured to ensure that the optical fiber 130 and the optical waveguide 311a are in the correct corresponding position.

It should be mentioned here that in order to ensure the optical coupling effect, the embodiment provides a dual curing process for the first adhesive 140. That is, after the aforementioned optical coupling process is completed, pre-curing is first performed on the first adhesive 140, that is, temporarily curing the first adhesive 140 by ultraviolet light, and then post-curing is performed on the completed module, that is, heating and curing the first adhesive 140 to ensure the structural strength of the cured first adhesive 140 and avoid environmental moisture or temperature from affecting it. Here, the optical coupling variation between the optical fiber 130 and the optical waveguide 311a in the embodiment due to the aforementioned adhering and curing processes is approximately ±15%.

Finally, when step S400 is performed, as shown in FIG. 2 and FIG. 3, the top housing 210 is assembled to the bottom housing 220 to cover the aforementioned optical engine 310 and optical fiber assemblies 100A and 100B that have completed the optical coupling, so that the optical fiber 130 and the stopper 170 are fixed between the top housing 210 and the bottom housing 220. At the same time, the bottom housing 220 also has clamping parts 221 and 222, and the top housing 210 also has corresponding clamping parts 211 and 212. Therefore, during the process of assembling the top housing 210 and the bottom housing 220 together, the clamping parts 222 and 212 correspond to each other, and the clamping parts 211 and 221 correspond to each other, so as to respectively extend into the protective sleeve 133 to clamp the outer covering layer 132 of the optical fiber 130 to complete the clamping of the optical fiber 130. At the same time, the assembled top housing 210 and bottom housing 220 can also provide a pressing effect on the stopper 170, so that the stopper 170 is fixed in the housing 200 along the X-axis. In addition, as shown in FIG. 2, the top housing 210 also has a buckle 213 for engaging with a side edge protrusion part 321 of the circuit board 320 so as to improve the structural strength and stability between the housing 200 and the optical module 300. Accordingly, when subsequent tensile and bending tests are conducted to verify the optical coupling of the optical engine 310 and the optical fiber assemblies 100A and 100B, the optical coupling variation caused by it was approximately 20%, thus proving the structural strength and stability between the housing 200 and the optical module 300.

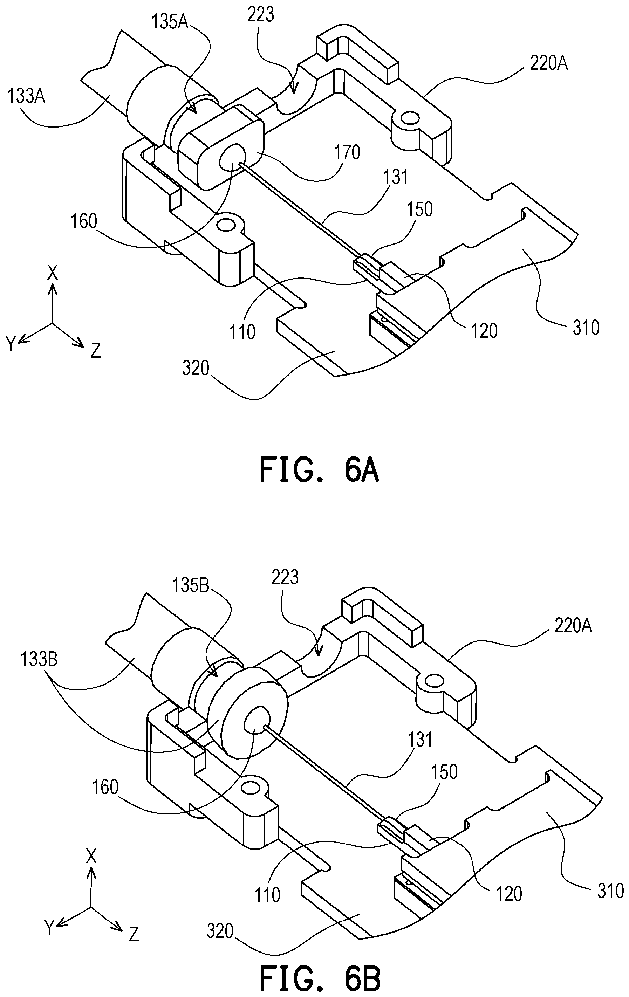

FIG. 6A to FIG. 6C are partial component schematic views of an optical communication device according to different embodiments of the disclosure. Referring to FIG. 6A first, and comparing with FIG. 2 or FIG. 3, different from the previous embodiment where there is a gap between the protective sleeve 133 and the stopper 170, a neck portion 135A of the embodiment is part of a protective sleeve 133A and formed as an annular recess to be supported on and locked onto the arc-shaped groove 223 of a bottom housing 220A. Similarly, the top housing (not shown) of the embodiment also has a corresponding arc-shaped groove like the bottom housing 220A to connect with the annular recess of the protective sleeve 133A.

Referring to FIG. 6B, the embodiment further extends a protective sleeve 133B into the bottom housing 220A and forms a neck portion 135B, so that the stopper 170 and the annular recess (neck portions 135 and 135A) of the previous embodiment can be regarded as part of the protective sleeve 133B.

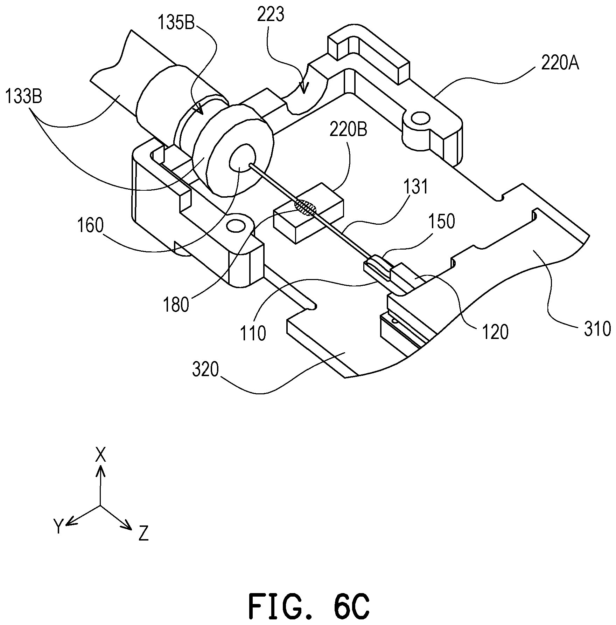

Referring to FIG. 6C, which further provides a support member 220B on the basis of FIG. 6B. As shown in FIG. 6C, the wire core 131 of the optical fiber 130 is suspended on the circuit board 320 between the stopper formed by the protective sleeve 133B and the base 110, the lid 120, and the second adhesive 150. Accordingly, the support member 220B is disposed on the circuit board 320 to support the suspended wire core 131. At the same time, the embodiment further provides a fourth adhesive 180 to adhere and fix the suspended portion of the wire core 131 and the support member 220B together so as to increase the structural strength of the optical fiber 130 at the suspended portion.

To sum up, in the above-mentioned embodiments of the disclosure, the relevant structures of the optical fiber assembly and the optical communication device are distributed on different components. The base has the groove for accommodating the optical fiber, and the lid has the adhesive surface for adhering and fixing to the photonic integrated circuit. Therefore, the required functions of fixing the optical fiber and optically coupling to the photonic integrated circuit are added to the base and the lid respectively. In this way, the complexity of component production will be effectively simplified. A single component only needs to correspond to a single additional function, so that the components (base and lid) can have adjustable space according to size requirements and optical coupling process requirements.

More importantly, the optical fiber assembly further includes the stopper, so that after the optical fiber passes through the stopper, the end of the optical fiber is clamped by the base and the lid. In this way, during the process of optical coupling and assembly of the optical fiber assembly with the housing and optical module, the stopper is inserted into the recess of the housing to achieve a pre-positioning effect, effectively improving the structural stability of subsequent optical coupling, and at the same time, providing a support effect for the optical fiber, so as to help the optical coupling process proceed smoothly. In addition, after the optical coupling is completed, the optical module and optical fiber assembly can also be clamped and fixed between the top housing and the bottom housing through the stopper and the optical fiber. Therefore, the structural limitations caused by the stopper and the housing allow the optical fiber assembly to withstand external force from outside the housing, so that the force is blocked due to the aforementioned structural limitations and prevented from being transmitted into the housing and affecting the docking relationship between the optical fiber assembly and the optical engine.

## Claims

1. An optical fiber assembly (100A, 100B), comprising:
a base (110), having a groove (111);
a lid (120), assembled to the base (110), and having an adhesive surface (121, 122);
an optical fiber (130), wherein part of the optical fiber (130) is accommodated along the groove (111), and positioned in the groove (111) by abutting against the lid (120); and
a first adhesive (140), wherein the adhesive surface (121, 122) is fixable to a photonic integrated circuit (PIC) (311) of an optical engine (310) via the first adhesive (140), so that the optical fiber (130) is adapted for optically coupling to an optical waveguide (311a) of the photonic integrated circuit (311).

2. The optical fiber assembly (100A, 100B) according to claim 1, wherein the adhesive surface (121, 122) is inclined relative to an optical axis (134) of the optical fiber (130), and an inclination angle is adapted for an optical coupling angle between the optical fiber (130) and the optical waveguide (311a).

3. The optical fiber assembly (100A, 100B) according to claim 1, further comprising a second adhesive (150) to fix the optical fiber (130), the base (110), and the lid (120) together.

4. The optical fiber assembly (100A, 100B) according to claim 1, wherein the adhesive surface (121, 122) protrudes outside the base (110).

5. The optical fiber assembly (100A, 100B) according to claim 1, wherein the lid (120) also has a recess (123) that separates the adhesive surface (121, 122) into two parts, and after extending out of the groove (111), an end of the optical fiber (130) is located at a position corresponding to the recess (123) and between the two parts.

6. The optical fiber assembly (100A, 100B) according to claim 1, further comprising a stopper (170) and a third adhesive (160), a wire core (131) of the optical fiber (130) passes through the stopper (170), the third adhesive (160) fixes the wire core (131) and the stopper (170) together, the optical fiber (130) has a protective sleeve (133, 133A, 133B), the optical fiber (130) has a neck portion (135, 135A, 135B) between the protective sleeve (133, 133A, 133B) and the stopper (170), during an optical coupling process, the optical engine (310) is placed on a carrying structure, the optical fiber assembly (100A, 100B) is locked onto the carrying structure via the stopper (170), the protective sleeve (133, 133A, 133B), and the neck portion (135, 135A, 135B), and the stopper (170) and the carrying structure generate an interference along an optical axis (134) of the optical fiber (130).

7. The optical fiber assembly (100A, 100B) according to claim 6, wherein the optical fiber (130) comprises the wire core (131), an outer covering layer (132), and the protective sleeve (133A), the outer covering layer (132) covers the wire core (131), the protective sleeve (133A) covers the outer covering layer (132), part of the outer covering layer (132) exposes the optical fiber (130) from the neck portion (135A), the neck portion (135A) is an annular recess of the protective sleeve (133A), and the stopper (170) is part of the protective sleeve (133A).

8. The optical fiber assembly (100A, 100B) according to claim 6, wherein the optical fiber (130) comprises the wire core (131), an outer covering layer (132), and the protective sleeve (133B), the outer covering layer (132) covers the wire core (131), the protective sleeve (133B) covers the outer covering layer (132), and part of the wire core (131) located between the stopper (170) and the base (110) is supported and fixed on a support member (220B).

9. The optical fiber assembly (100A, 100B) according to any one of claim 1 to claim 8,
wherein the base (110) is step-shaped and has a high step (ST1), a first front edge (112), and a first rear edge (113), the groove (111) is located on the high step (ST1) and connected between the first front edge (112) and the first rear edge (113), the first front edge (112) is adapted to face the photonic integrated circuit (311), the first rear edge (113) is adapted to face away from the photonic integrated circuit (311), and the first rear edge (113) is inclined to connect the high step (ST1),
wherein the lid (120) is assembled to the high step (ST1), wherein the lid (120) has a second front edge (124) and a second rear edge (125), the second front edge (124) is adapted to face the photonic integrated circuit (311) and protrudes from the first front edge (112), and the second rear edge (125) is aligned with the first rear edge (113) located at the high step (ST1).

10. The optical fiber assembly according to claim 9, wherein the lid (120) has the adhesive surface (121, 122) located at the second front edge (124).

11. The optical fiber assembly according to claim 9, wherein the base (110) also has a low step (ST2) connected to the second rear edge (125).

12. The optical fiber assembly according to claim 9, wherein a length of the base along an extending direction of the optical fiber is greater than a length of the lid along an extending direction of the optical fiber.

13. An optical communication device (10), comprising:
a housing (200);
the optical engine (310) configured in the housing (200);
at least one optical fiber assembly (100A, 100B) according to any one of claim 1 to claim 9, configured in the housing (200).

14. A manufacturing method of an optical communication device (10), comprising:
providing an optical module (300), an optical fiber assembly (100A, 100B), and a housing (200), wherein the optical module (300) comprises an optical engine (310) and a circuit board (320), the optical engine (310) is configured on the circuit board (320), the optical engine (310) has a photonic integrated circuit (311), the optical fiber assembly (100A, 100B) comprises a base (110), a lid (120), an optical fiber (130), and a stopper (170), the optical fiber (130) passes through the stopper (170), the optical fiber (130) is clamped between the base (110) and the lid (120), so that an end of the optical fiber (130) protrudes out of the base (110) and the lid (120), and the housing (200) comprises a bottom housing (220, 220A, 220B) with a top housing (210);
assembling the circuit board (320) and the optical fiber assembly (100A, 100B) to the bottom housing (220, 220A, 220B) respectively, wherein the optical fiber assembly (100A, 100B) is limited by the stopper (170) inserted into a recess (223, 224) of the bottom housing (220, 220A, 220B); and
optically coupling the photonic integrated circuit (311) and the optical fiber assembly (100A, 100B) comprising:
placing the optical module (300) and the bottom housing (200, 220A, 220B) on an optical coupling machine;
providing a first adhesive (140) on an adhesive surface (121, 122) of the lid (120), so that the adhesive surface (121, 122) abuts against the photonic integrated circuit (311) via the first adhesive (140);
starting the optical engine (310);
optically coupling the end of the optical fiber (130) to an optical waveguide (311a) of the photonic integrated circuit (311) via the optical coupling machine; and
curing the first adhesive (140); and
assembling the top housing (210) to the bottom housing (200, 220A, 220B) to cover the optical engine (310) and the optical fiber assembly (100A, 100B), so that the optical fiber (130) and the stopper (170) are fixed between the top housing (210) and the bottom housing (200, 220A, 220B).

15. The manufacturing method of the optical communication device (10) according to claim 14, wherein the manufacturing method of the optical fiber assembly (100A, 100B) comprises:
after the optical fiber (130) passes through the stopper (170), adhering and fixing the optical fiber (130) and the stopper (170) together via a third adhesive (160);
placing part of the optical fiber (130) along a groove (111) of the base (110), so that the end of the optical fiber (130) protrudes out of the groove (111);
assembling the lid (120) to the base (110), so that the part of the optical fiber (130) in the groove (111) is clamped between the lid (120) and the base (110); and
adhering and fixing the lid (120), the optical fiber (130), and the base (110) together via a second adhesive (150),
wherein the first adhesive (140) is an ultraviolet adhesive, and the method of curing the first adhesive (140) comprises:
pre-curing, to temporarily cure the first adhesive (140) by ultraviolet light; and
post-curing, to heat and cure the first adhesive (140),
wherein the optical coupling machine clamps the lid (120) and the base (110) via a movable clamp to adjust a coupling position of the end of the optical fiber (130) corresponding to the optical waveguide (311a).

## Revendications

1. Ensemble de fibre optique (100A, 100B), comprenant :
une base (110), comportant une rainure (111) ;
un couvercle (120), assemblé à la base (110), et comportant une surface adhésive (121, 122) ;
une fibre optique (130), dont une partie de la fibre optique (130) est logée le long de la rainure (111) et positionnée dans la rainure (111) en venant en butée contre le couvercle (120) ; et
un premier adhésif (140), dans lequel la surface adhésive (121, 122) peut être fixée à un circuit intégré photonique (PIC) (311) d'un moteur optique (310) via le premier adhésif (140), de sorte que la fibre optique (130) soit adaptée pour être couplée optiquement à un guide d'onde optique (311a) du circuit intégré photonique (311).

2. Ensemble de fibre optique (100A, 100B) selon la revendication 1, dans lequel la surface adhésive (121, 122) est inclinée par rapport à un axe optique (134) de la fibre optique (130), et un angle d'inclinaison est adapté à un angle de couplage optique entre la fibre optique (130) et le guide d'onde optique (311a).

3. Ensemble de fibre optique (100A, 100B) selon la revendication 1, comprenant en outre un deuxième adhésif (150) destiné à fixer ensemble la fibre optique (130), la base (110) et le couvercle (120).

4. Ensemble de fibre optique (100A, 100B) selon la revendication 1, dans lequel la surface adhésive (121, 122) fait saillie à l'extérieur de la base (110).

5. Ensemble de fibre optique (100A, 100B) selon la revendication 1, dans lequel le couvercle (120) comporte également un évidement (123) qui sépare la surface adhésive (121, 122) en deux parties, et après s'être prolongée hors de la rainure (111), une extrémité de la fibre optique (130) se trouve à une position correspondant à l'évidement (123) et entre les deux parties.

6. Ensemble de fibre optique (100A, 100B) selon la revendication 1, comprenant en outre une butée (170) et un troisième adhésif (160), un noyau de fil (131) de la fibre optique (130) traversant la butée (170), le troisième adhésif (160) fixe ensemble l'noyau de fil (131) et la butée (170), la fibre optique (130) comporte une gaine de protection (133, 133A, 133B), la fibre optique (130) comporte une partie rétrécie (135, 135A, 135B) entre la gaine de protection (133, 133A, 133B) et l'butée (170), au cours d'un processus de couplage optique, le moteur optique (100A, 100B) est placé sur une structure de support, l'ensemble de fibre optique (130) est verrouillé sur la structure de support via l'butée (170), la gaine de protection (133, 133A, 133B) et la partie de col (135, 135A, 135B), et la butée (170) ainsi que la structure de support génèrent une interférence le long d'un axe optique (134) de la fibre optique (130).

7. Ensemble de fibre optique (100A, 100B) selon la revendication 6, dans lequel la fibre optique (130) comprend l'noyau de fil (131), une couche de revêtement externe (132) et le gaine de protection (133A), la couche de revêtement externe (132) recouvre l'noyau de fil (131), le gaine de protection (133A) recouvre la couche de revêtement externe (132), une partie de la couche de revêtement externe (132) expose la fibre optique (130) à partir de la partie en col (135A), la partie en col (135A) est un évidement annulaire de la gaine de protection (133A), et la butée (170) fait partie de la gaine de protection (133A).

8. Ensemble de fibre optique (100A, 100B) selon la revendication 6, dans lequel la fibre optique (130) comprend l'noyau de fil (131), une couche de revêtement externe (132) et la gaine de protection (133B), la couche de revêtement externe (132) recouvre l'noyau de fil (131), la gaine de protection (133B) recouvre la couche de revêtement externe (132), et une partie de l'noyau de fil (131) située entre la butée (170) et la base (110) est supportée et fixée sur un élément de support (220B).

9. Ensemble de fibre optique (100A, 100B) selon l'une quelconque des revendications 1 à 8,
dans lequel la base (110) présente une forme en gradin et comporte un gradin supérieur (ST1), un premier bord avant (112) et un premier bord arrière (113),
la rainure (111) est située sur le gradin supérieur (ST1) et relie le premier bord avant (112) au premier bord arrière (113), le premier bord avant (112) est agencé pour faire face au circuit intégré photonique (311), le premier bord arrière (113) est agencé pour être tourné à l'opposé du circuit intégré photonique (311), et le premier bord arrière (113) est incliné de manière à rejoindre le gradin supérieur (ST1),
dans lequel le couvercle (120) est assemblé au gradin supérieur (ST1),
dans lequel le couvercle (120) comporte un deuxième bord avant (124) et un deuxième bord arrière (125), le deuxième bord avant (124) étant adapté pour faire face au circuit intégré photonique (311) et faisant saillie par rapport au premier bord avant (112), et le deuxième bord arrière (125) étant aligné avec le premier bord arrière (113) situé au niveau de la marche surélevée (ST1).

10. Ensemble de fibre optique selon la revendication 9, dans lequel le couvercle (120) comporte la surface adhésive (121, 122) située au niveau du deuxième bord avant (124).

11. Ensemble de fibre optique selon la revendication 9, dans lequel la base (110) comporte également un gradin inférieur (ST2) relié au deuxième bord arrière (125).

12. Ensemble de fibre optique selon la revendication 9, dans lequel la longueur de la base dans la direction d'extension de la fibre optique est supérieure à la longueur du couvercle dans la direction d'extension de la fibre optique.

13. Dispositif de communication optique (10), comprenant :
un boîtier (200) ;
le moteur optique (310), monté dans le boîtier (200) ;
au moins un Ensemble de fibre optique (100A, 100B) selon l'une quelconque des revendications 1 à 9, monté dans le boîtier (200).

14. Procédé de fabrication d'un dispositif de communication optique (10), comprenant :
la fourniture d'un module optique (300), d'un Ensemble de fibre optique (100A, 100B) et d'un boîtier (200), dans lequel le module optique (300) comprend un moteur optique (310) et une carte de circuit imprimé (320), le moteur optique (310) étant monté sur la carte de circuit imprimé (320), le moteur optique (310) comporte un circuit intégré photonique (311), l'Ensemble de fibre optique (100A, 100B) comprend une base (110), un couvercle (120), une fibre optique (130) et une butée (170), la fibre optique (130) traverse la butée (170), la fibre optique (130) est serrée entre la base (110) et le couvercle (120), de sorte qu'une extrémité de la fibre optique (130) dépasse de la base (110) et du couvercle (120), et le boîtier (200) comprend un boîtier inférieur (220, 220A, 220B) et
d'un boîtier supérieur (210) ;
l'assemblage de la carte de circuit imprimé (320) et de l'ensemble de fibre optique (100A, 100B) respectivement sur le boîtier inférieur (220, 220A, 220B), l'ensemble de fibre optique (100A, 100B) est maintenu en place par la butée (170) insérée dans un évidement (223, 224) du boîtier inférieur (220, 220A, 220B) ; et
couper optiquement le circuit intégré photonique (311) et l'Ensemble de fibre optique (100A, 100B), comprenant :
le placement du module optique (300) et du boîtier inférieur (200, 220A, 220B) sur une machine de couplage optique ;
l'application d'un premier adhésif (140) sur une surface adhésive (121, 122) du couvercle (120), de sorte que la surface adhésive (121, 122) vienne en butée contre le circuit intégré photonique (311) par l'intermédiaire du premier adhésif (140) ;
la mise en marche du moteur optique (310) ;
coupler optiquement l'extrémité de la fibre optique (130) à un guide d'onde optique (311a) du circuit intégré photonique (311) à l'aide de la machine de couplage optique ; et
durcir le premier adhésif (140) ; et
assembler le boîtier supérieur (210) au boîtier inférieur (200, 220A, 220B) afin de recouvrir le moteur optique (310) et l'Ensemble de fibre optique (100A, 100B), de sorte que la fibre optique (130) et la butée (170) soient fixées entre le boîtier supérieur (210) et le boîtier inférieur (200, 220A, 220B).

15. Procédé de fabrication du dispositif de communication optique (10) selon la revendication 14, dans lequel le procédé de fabrication de l'Ensemble de fibre optique (100A, 100B) comprend :
après le passage de la fibre optique (130) à travers la butée (170), le collage et la fixation de la fibre optique (130) et de la butée (170) l'une à l'autre à l'aide d'un troisième adhésif (160) ;
le placement d'une partie de la fibre optique (130) le long d'une rainure (111) de la base (110), de sorte que l'extrémité de la fibre optique (130) dépasse de la rainure (111) ; assembler le couvercle (120) à la base (110), de sorte que la partie de la fibre optique (130) située dans la rainure (111) soit serrée entre le couvercle (120) et la base (110) ; et
collage et fixation du couvercle (120), de la fibre optique (130) et de la base (110) les uns aux autres à l'aide d'un deuxième adhésif (150),
dans lequel le premier adhésif (140) est un adhésif ultraviolet, et le procédé de durcissement du premier adhésif (140) comprend :
un pré-durcissement, pour durcir temporairement le premier adhésif (140) à l'aide d'une lumière ultraviolette ; et
un post-durcissement, pour chauffer et durcir le premier adhésif (140),
la machine de couplage optique serrant le couvercle (120) et la base (110) à l'aide d'une pince mobile afin d'ajuster une position de couplage de l'extrémité de la fibre optique (130) correspondant au guide d'onde optique (311a).

## Patentansprüche

1. Optische Faseranordnung (100A, 100B), umfassend:
eine Basis (110) mit einer Nut (111);
einen Deckel (120), der an der Basis (110) montiert ist und eine Klebefläche (121, 122) aufweist;
eine optische Faser (130), wobei ein Teil der optischen Faser (130) entlang der Nut (111) aufgenommen und durch Anliegen an dem Deckel (120) in der Nut (111) positioniert ist; und
ein erstes Klebemittel (140), wobei die Klebefläche (121, 122) über das erste Klebemittel (140) an einer photonischen integrierten Schaltung (PIC) (311) einer optischen Engine (310) befestigt werden kann, so dass die optische Faser (130) für die optische Kopplung an einen optischen Wellenleiter (311a) der photonischen integrierten Schaltung (311) angepasst ist.

2. Optische Faseranordnung (100A, 100B) nach Anspruch 1, wobei die Klebefläche (121, 122) relativ zu einer optischen Achse (134) der optischen Faser (130) geneigt ist und ein Neigungswinkel an einen optischen Kopplungswinkel zwischen der optischen Faser (130) und dem optischen Wellenleiter (311a) angepasst ist.

3. Optische Faseranordnung (100A, 100B) nach Anspruch 1, ferner umfassend ein zweites Klebemittel (150), um die optische Faser (130), die Basis (110) und den Deckel (120) miteinander zu befestigen.

4. Optische Faseranordnung (100A, 100B) nach Anspruch 1, wobei die Klebefläche (121, 122) über die Basis (110) vorsteht.

5. Optische Faseranordnung (100A, 100B) nach Anspruch 1, wobei der Deckel (120) zudem eine Aussparung (123) aufweist, die die Klebefläche (121, 122) in zwei Teile teilt, und wobei sich ein Ende der optischen Faser (130) nach dem Austritt aus der Nut (111) an einer Position, die der Aussparung (123) entspricht, und zwischen den beiden Teilen befindet.

6. Optische Faseranordnung (100A, 100B) nach Anspruch 1, ferner umfassend einen Anschlag (170) und ein drittes Klebemittel (160), wobei ein Drahtkern (131) der optischen Faser (130) durch den Anschlag (170) verläuft, das dritte Klebemittel (160) den Drahtkern (131) und den Anschlag (170) miteinander befestigt, die optische Faser (130) eine Schutzhülse (133, 133A, 133B) aufweist, die optische Faser (130) einen Halsabschnitt (135, 135A, 135B) zwischen der Schutzhülse (133, 133A, 133B) und dem Anschlag (170) aufweist, während eines optischen Kopplungsprozesses die optische Engine (310) auf einer Tragestruktur angeordnet wird, die optische Faseranordnung (100A, 100B) über den Anschlag (170), die Schutzhülse (133, 133A, 133B) und den Halsabschnitt (135, 135A, 135B) an der Tragestruktur verriegelt wird und der Anschlag (170) und die Tragestruktur entlang einer optischen Achse (134) der optischen Faser (130) einen Eingriff erzeugen.

7. Optische Faseranordnung (100A, 100B) nach Anspruch 6, wobei die optische Faser (130) den Drahtkern (131), eine äußere Abdeckschicht (132) und die Schutzhülse (133A) umfasst, die äußere Abdeckschicht (132) den Drahtkern (131) bedeckt, die Schutzhülse (133A) die äußere Abdeckschicht (132) bedeckt, ein Teil der äußeren Abdeckschicht (132) die optische Faser (130) von dem Halsabschnitt (135A) freilegt, der Halsabschnitt (135A) eine ringförmige Aussparung der Schutzhülse (133A) ist und der Anschlag (170) ein Teil der Schutzhülse (133A) ist.

8. Optische Faseranordnung (100A, 100B) nach Anspruch 6, wobei die optische Faser (130) den Drahtkern (131), eine äußere Abdeckschicht (132) und die Schutzhülse (133B) umfasst, die äußere Abdeckschicht (132) den Drahtkern (131) bedeckt, die Schutzhülse (133B) die äußere Abdeckschicht (132) bedeckt und ein Teil des Drahtkerns (131), der sich zwischen dem Anschlag (170) und der Basis (110) befindet, auf einem Stützelement (220B) gestützt und befestigt ist.

9. Optische Faseranordnung (100A, 100B) nach einem der Ansprüche 1 bis 8,
wobei die Basis (110) stufenförmig ist und eine hohe Stufe (ST1), eine erste Vorderkante (112) und eine erste Hinterkante (113) aufweist, sich die Nut (111) auf der hohen Stufe (ST1) befindet und zwischen der ersten Vorderkante (112) und der ersten Hinterkante (113) verbunden ist, die erste Vorderkante (112) angepasst ist, der photonischen integrierten Schaltung (311) zugewandt zu sein, die erste Hinterkante (113) angepasst ist, von der photonischen integrierten Schaltung (311) abgewandt zu sein, und die erste Hinterkante (113) geneigt ist, um die hohe Stufe (ST1) zu verbinden,
wobei der Deckel (120) an der hohen Stufe (ST1) montiert ist, wobei der Deckel (120) eine zweite Vorderkante (124) und eine zweite Hinterkante (125) aufweist, die zweite Vorderkante (124) angepasst ist, der photonischen integrierten Schaltung (311) zugewandt zu sein und von der ersten Vorderkante (112) vorsteht, und die zweite Hinterkante (125) mit der ersten Hinterkante (113), die sich an der hohen Stufe (ST1) befindet, ausgerichtet ist.

10. Optische Faseranordnung nach Anspruch 9, wobei der Deckel (120) die Klebefläche (121, 122) aufweist, die sich an der zweiten Vorderkante (124) befindet.

11. Optische Faseranordnung nach Anspruch 9, wobei die Basis (110) zudem eine niedrige Stufe (ST2) aufweist, die mit der zweiten Hinterkante (125) verbunden ist.

12. Optische Faseranordnung nach Anspruch 9, wobei eine Länge der Basis entlang einer Erstreckungsrichtung der optischen Faser größer als eine Länge des Deckels entlang einer Erstreckungsrichtung der optischen Faser ist.

13. Optische Kommunikationsvorrichtung (10), umfassend:
ein Gehäuse (200);
die optische Engine (310), die in dem Gehäuse (200) konfiguriert ist;
mindestens eine optische Faseranordnung (100A, 100B) nach einem der Ansprüche 1 bis 9, die in dem Gehäuse (200) konfiguriert ist.

14. Herstellungsverfahren einer optischen Kommunikationsvorrichtung (10), umfassend:
Bereitstellen eines optischen Moduls (300), einer optischen Faseranordnung (100A, 100B) und eines Gehäuses (200), wobei das optische Modul (300) eine optische Engine (310) und eine Leiterplatte (320) umfasst, die optische Engine (310) auf der Leiterplatte (320) konfiguriert ist, die optische Engine (310) eine photonische integrierte Schaltung (311) aufweist, die optische Faseranordnung (100A, 100B) eine Basis (110), einen Deckel (120), eine optische Faser (130) und einen Anschlag (170) umfasst, die optische Faser (130) durch den Anschlag (170) verläuft, die optische Faser (130) zwischen der Basis (110) und dem Deckel (120) eingeklemmt ist, so dass ein Ende der optischen Faser (130) aus der Basis (110) und dem Deckel (120) vorsteht, und das Gehäuse (200) ein unteres Gehäuse (220, 220A, 220B) mit einem oberen Gehäuse (210) umfasst;
jeweiliges Montieren der Leiterplatte (320) und der optischen Faseranordnung (100A, 100B) an dem unteren Gehäuse (220, 220A, 220B), wobei die optische Faseranordnung (100A, 100B) durch den Anschlag (170), der in eine Aussparung (223, 224) des unteren Gehäuses (220, 220A, 220B) eingesetzt ist, begrenzt wird; und
optisches Koppeln der photonischen integrierten Schaltung (311) und der optischen Faseranordnung (100A, 100B), umfassend:
Anordnen des optischen Moduls (300) und des unteren Gehäuses (200, 220A, 220B) auf einer optischen Kopplungsmaschine;
Bereitstellen eines ersten Klebemittels (140) auf einer Klebefläche (121, 122) des Deckels (120), so dass die Klebefläche (121, 122) über das erste Klebemittel (140) an der photonischen integrierten Schaltung (311) anliegt;
Starten der optischen Engine (310);
optisches Koppeln des Endes der optischen Faser (130) an einen optischen Wellenleiter (311a) der photonischen integrierten Schaltung (311) über die optische Kopplungsmaschine; und
Aushärten des ersten Klebemittels (140); und
Montieren des oberen Gehäuses (210) an dem unteren Gehäuse (200, 220A, 220B), um die optische Engine (310) und die optische Faseranordnung (100A, 100B) abzudecken, so dass die optische Faser (130) und der Anschlag (170) zwischen dem oberen Gehäuse (210) und dem unteren Gehäuse (200, 220A, 220B) befestigt sind.

15. Herstellungsverfahren der optischen Kommunikationsvorrichtung (10) nach Anspruch 14, wobei das Herstellungsverfahren der optischen Faseranordnung (100A, 100B) umfasst:
nachdem die optische Faser (130) durch den Anschlag (170) verläuft, Verkleben und Befestigen der optischen Faser (130) und des Anschlags (170) miteinander über ein drittes Klebemittel (160);
Anordnen eines Teils der optischen Faser (130) entlang einer Nut (111) der Basis (110), so dass das Ende der optischen Faser (130) aus der Nut (111) vorsteht;
Montieren des Deckels (120) an der Basis (110), so dass der Teil der optischen Faser (130) in der Nut (111) zwischen dem Deckel (120) und der Basis (110) eingeklemmt ist; und Verkleben und Befestigen des Deckels (120), der optischen Faser (130) und der Basis (110) miteinander über ein zweites Klebemittel (150),
wobei das erste Klebemittel (140) ein Ultraviolett-Klebemittel ist und das Verfahren zum Aushärten des ersten Klebemittels (140) umfasst:
Vorhärten, um das erste Klebemittel (140) durch Ultraviolettlicht vorübergehend auszuhärten; und
Nachhärten, um das erste Klebemittel (140) zu erwärmen und auszuhärten,
wobei die optische Kopplungsmaschine den Deckel (120) und die Basis (110) über eine bewegliche Klemme einklemmt, um eine Kopplungsposition des Endes der optischen Faser (130), die dem optischen Wellenleiter (311a) entspricht, einzustellen.
